# EUROPEAN PATENT SPECIFICATION

(11) **EP 3 892 065 B1**
(45) Date of publication and mention of the grant of the patent: **29.07.2026**
(21) Application number: 19893475.4
(22) Date of filing: 04.12.2019
(51) Int. Cl.: H05B 7/148, H05B 7/152, F27B 3/08, F27D 11/08, F27D 19/00

(54) **SYSTEM AND METHOD FOR STABILIZING ELECTRICAL POWER FOR LOSSES OF ARC IN ELECTRIC ARC FURNACES**
SYSTEM UND VERFAHREN ZUR STABILISIERUNG DER ELEKTRISCHEN LEISTUNG FÜR LICHTBOGENVERLUSTE IN LICHTBOGENÖFEN
SYSTÈME ET PROCÉDÉ DE STABILISATION DE PUISSANCE ÉLECTRIQUE POUR DES PERTES D'ARC DANS DES FOURS À ARC ÉLECTRIQUE

(30) Priority: 05.12.2018 US 201862775632 P
(43) Date of publication of application: 13.10.2021
(73) Proprietor: Hatch Ltd., Mississauga, Ontario L5K 2R7 (CA)
(72) Inventor: SEDIGHY, Mohammad, Mississauga, Ontario L5E 2N1 (CA); DERRAH, Susan Elaine, Oakville, Ontario L6L 6H7 (CA)
(74) Representative: LKGLOBAL Partnerschaftsgesellschaft mbB
(86) International application number: PCT/CA2019/051749
(87) International publication number: WO 2020/113336

(56) References cited:
- WO-A1-03/034566
- WO-A1-2006/024149
- WO-A2-02/063927

## Description

### FIELD

This disclosure relates to metallurgical facilities comprising electric arc furnaces.

### BACKGROUND

Metallurgical Electric Arc Furnaces (EAFs) smelt solid matter (ore) containing metals into desirable materials and undesirable materials using high heat. The heat is generated using electric arcs which are produced between large electrodes and the bath of material being smelted within the furnace. EAFs may also be used for melting materials such as scrap steel, or for refining molten metals. To produce the arc, EAF electrodes are powered by an electrical power supply. The power supply may be on-site generators, or a utility grid. On site generators can include diesel power plants, coal-fired power plants, renewable power plants, etc.

During normal operation, electric arc furnaces are typically configured to consume a select amount of power around an operator setpoint. Nevertheless, conventional arc furnaces still have widely fluctuating power consumption profiles. This is problematic. The amount of power generated or provided by the power supply needs to match the amount of power consumed by the furnace at any point in time, but power supplies are typically more efficient when providing a steady amount of power.

Arc furnaces are typically equipped with an automatic electrode positioning system to try to help regulate the amount of power drawn by the electrodes so it is at a target operator setpoint. Moving the electrodes up or down in the furnace changes the length of the arc, and the length of the arc partially determines the amount of power the electrodes draw from the power supply. This mechanism has limited capacity, however, to compensate for large power fluctuations due to the limited speed at which the large, heavy, electrodes can be moved. A furnace transformer tap adjustment system can also be used for less frequent adjustments of electrode voltage, for example when going from one power setpoint level to another. As mechanical devices with wear and tear concerns and limited speed, they are rarely useful for adjustments to deal with short term power fluctuations

Some arc furnaces have furnace power electronic control systems which provide a fast and temporary variation of the electricity flow to the furnace. This helps limit furnace power consumption swings above the setpoint, allowing for a more stable furnace power consumption profile.

Conventional electrode positioning and tap control systems and furnace power electronic control systems, however, have limited ability to inhibit drops in furnace power consumption below the setpoint due to power supply electrical limits in combination with furnace electrical characteristics.

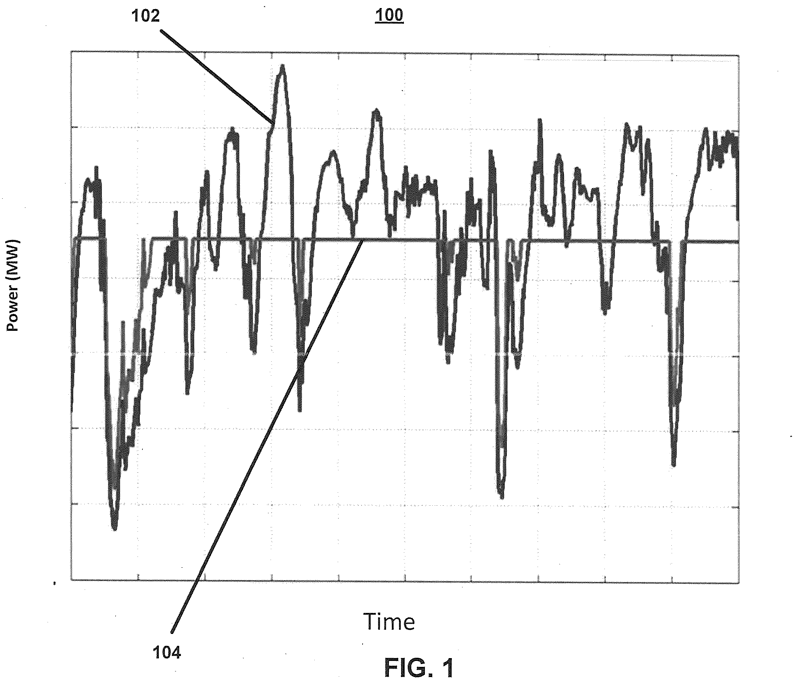

**FIG.** 1 shows a graph 100 of example power consumption profiles over time for an arc furnace without a conventional electronic control system 102 and an arc furnace with such an electronic control system 104. As shown, power swings above the setpoint are eliminated, but not all power dips below the setpoint are eliminated (even though the depth and duration of some of the power dips are improved).

Arc furnace power consumption may suddenly drop due to unscheduled furnace electrical breaker trips. Such breaker trips are relatively infrequent, but when they occur their cause needs to be investigated and this can take time on the order of hours requiring a reduction in power supply output.

A more common and frequent reason for drops in furnace power consumption is one or more electrodes losing their arc (also referred to herein as a Loss of Arc or LOA). The dips in the graph of FIG. 1 are due to LOAs. Such types of LOA dips may last for several minutes or even longer depending how quickly the arc can be re-established. There are a number of different causes for LOAs, LOAs cannot be completely avoided, and LOAs may occur as frequently as a few times an hour depending on the furnace. Furthermore, while running under balanced electrical power conditions, an LOA for a single electrode in a 3-electrode AC furnace, or a 2-electrode DC furnace, can cause for example a sudden overall furnace power consumption dip of 50%.

When furnaces are supplied by on-site power generation equipment such as thermal power plants, or by a weak utility electrical grids, power drops due to LOAs can be especially harmful because they cause a sudden and significant mismatch between the power being consumed, and the power available from a generator shaft. This mismatch leads to power frequency rise due to an increase in the rotational speed of the generator rotors. Conventionally, to prevent generator overspeed and protect the power plant during an LOA, boiler steam is immediately discharged into the atmosphere or otherwise caused to bypass the turbine generator. This quickly reduces the power output of the power plant to match the lower power consumption of the furnace.

After recovering the arc from an LOA event, the power plant is not ready to supply the same amount of power as it was supplying before the LOA due to lost steam pressure and temperature drop of turbine blades. The thermal plant power must be slowly ramped up over a period of several minutes. As a result, losses of arc directly lower furnace productivity, mainly due to the slow power ramp-up requirement subsequent to an LOA. It also prevents operating at higher furnace powers due to concerns over the increased magnitude of power dips due to losses of arc. Although a lower furnace power consumption setpoint is less optimal, a smaller drop in power consumption is easier to handle and recover from. In addition, an unscheduled lower furnace power may result in a mismatch between the existing feed patterns of new material into the furnace and the furnace production rate. This may require operator intervention to adjust or override the automatic feed control system to inhibit or slow down the rate of addition of new feed into the furnace after the LOA and then gradually ramp up the feed rate as power ramps up.

WO 2006/024149 A1 describes a method and system for stabilizing energy consumption in multiple loads, or in single multi-phase loads. The method and system also compensates for unbalance in multi-phase loads. A central controller monitors variable reactances in the loads and identifies situations of power and/or current fluctuation and/or unbalance. It determines appropriate corrective action by the other loads/phases to compensate for the power and/or current change or unbalance due to the problematic load, and it issues control signals instructing variable reactor controllers associated with the other loads to adjust accordingly. The method and system may be applied to electric arc furnace installations. In this context, the method and system provide an electrode position controller coupled to the feed rate controller so as to predictively anticipate the introduction of new source material and lower the electrodes so as to prevent arc extinguishment while the variable reactors maintain predetermined power set-points. The electrode position controller may be used in place of the variable reactance control system to take corrective action to address power and/or current changes or unbalances.

WO 03/034566 A1 describes variable shunt and series connected reactors that are used in a complimentary combination in an electric arc furnace to provide improved flicker control. A power control system for a time-varying AC load, such as an electric arc furnace, connected to an AC power supply line includes a first variable reactance intermediate the power supply line and the load, and a second variable reactance connected in parallel with the power supply line. A control system is provided for (i) monitoring load current and adjusting the first variable reactance in response to changes in the monitored load current; and (ii) monitoring reactive power draw by the load and adjusting the second variable reactance in response to changes in the monitored reactive power draw. The first variable reactance and second variable reactance are each primarily used to mitigate flicker at different times during the load operation.

WO 02/063927 A2 describes a power control system for an AC electric arc furnace. The control system includes variable reactors located intermediate a furnace power supply and arc electrodes that are height adjustable. The control system monitors operating characteristics of the furnace that are indicative of the active power consumption of the furnace and adjusts the variable reactors and the electrode height so as to minimize variations in the active power consumption. Loss of electrode arc can be predicted and countered by lowering the electrodes and decreasing the reactance of the variable reactors.

An improved method and system for addressing losses of arc in metallurgical arc furnaces is desired.

### BRIEF DESCRIPTION OF THE FIGURES

**FIG.** 1 shows a graph of example power consumption profiles over time for arc furnaces with and without an electronic control system.
**FIG.** 2 shows a system for stabilizing power in response to a loss of arc in an electrode of an arc furnace in accordance with an embodiment of the present disclosure.
**FIG. 3** shows a flow chart of a method for stabilizing power consumption in an electric arc furnace in accordance with an embodiment of the present disclosure.
**FIG. 4** shows a representative Power Voltage Current (PVC) diagram plotting the power being consumed by an electrode against the current passing through the electrode at a given transform tap voltage for the steps shown in FIG. 3, in accordance with an embodiment of the present disclosure.
**FIG.** 5 shows separate example graphs for power and current, and thyristor firing angle and electrode positions, for the electrode and furnace of FIG. 4, over a period of time for each of the steps shown in FIG. 3, in accordance with an embodiment of the present disclosure.
**FIG. 6A** shows example plots of electrode consumption power and total load power (as observed by a power supply) for a loss of arc event in a conventional electric arc furnace.
**FIG. 6B** shows example plots of furnace consumption power and total load power (as observed by a power supply) for a loss of are event in an electric arc furnace in accordance with and embodiment of the present disclosure.
**FIG.** 7 shows a representative power voltage current diagram similar to that of FIG. 4, but for an arc furnace, but without a furnace power electronic control system.
**FIG.** 8 shows a load controller and load in accordance with an embodiment of the present disclosure.
**FIG.** 9 shows another load controller and resistor in accordance with another embodiment of the present disclosure.
**FIGS. 10A, 10B,** and **10C** each show a different configuration for a furnace power electronic control system connected to and for controlling an electrode and the electrode positing system including a hoist, all in accordance with an embodiment of the present disclosure.

### DETAILED DESCRIPTION

According to the invention, a method with the features of claim 1 and a system with the features of claim 12 are provided. Exemplary embodiments are evident from the dependent claims and from the following description. In accordance with an embodiment of the present disclosure, a load is used to stabilize power when an electrode loses its arc. Power that had been going to the electrode to produce the arc, is instead absorbed by the load. The load helps maintain the net power drawn from the power supply system within an allowable range so that the power supply can continue to output the same or similar amount of power that it had been outputting prior to the electrode losing its arc. Once the arc is re-ignited, the power is transitioned from the load back to the electrode. In this way, the total power draw can be maintained at pre-LOA levels throughout the entire LOA event. Keeping the power supply at a similar power output helps expedite re-establishing power to the electrode at desirable levels, including pre-LOA levels. Since the LOA duration becomes much shorter, the power supply does not need to be adjusted, and adjustments to furnace feed material addition rate can also be avoided because furnace production levels are maintained. And by re-establishing power to the electrode more quickly, the load size can be minimized. A controller may be used to coordinate transitioning the power during an LOA event. The controller may help expedite re-establishing power to the electrode at a desirable level. The controller may also help protect against unwanted current spikes due to arc re-ignition.

In an embodiment, a method for stabilizing electrical power for a loss of an arc of an electrode in an electric arc furnace, the electrode receiving an amount of electrical power from a power supply to produce the arc, comprises detecting a loss of arc event for an electrode based on a furnace power consumption parameter, in response to determining the loss of arc event, causing a portion of the amount of power from the power supply to be absorbed by a load; in response to determining the loss of arc event, moving the electrode, and varying the thyristor firing angle to help expedite re-ignition of the arc and control an electrode power consumption parameter of the electrode; and after re-ignition of the arc, inhibiting electrical power from going to the load. The furnace power consumption parameter may comprise one or more of electrode power, electrode current, electrode voltage, reactive power, apparent power, power factor change, bus voltage amplitude, and bus voltage frequency. Detecting the loss of arc event may be based on detecting a threshold change in the furnace power consumption parameter. Coordinating moving the electrode with varying the thyristor firing angle may help one or more of expedite re-ignition of the arc, control an electrode power consumption parameter of the electrode, and expedite increasing the amount of power to the electrode to a select amount.

In an embodiment, a method for stabilizing electrical power for a loss of an arc of an electrode in an electric arc furnace, the electrode receiving an amount of electrical power from a power supply to produce the arc, comprises determining a loss of arc event for an electrode; causing a portion of the amount of power from the power supply to be absorbed by a load; moving the electrode to one or more of help expedite re-ignition of the arc and help control an electrode power consumption parameter of the electrode; and after re-ignition of the arc, inhibiting a portion of the electrical power from going to the load. One or more of a furnace power consumption parameter and a thyristor firing angle of a power controller of the electrode may be used to determine the loss of arc. In response to determining the loss of arc event, the thyristor firing angle may be varied to one or more of help expedite re-ignition of the arc and help control an electrode power consumption parameter of the electrode. The portion of the amount of electrical power may be stored in the load as energy and released into the power supply.The furnace power consumption parameters may be obtained from one or more of a furnace power electronic control system, the power supply, and the electric arc furnace. Determining the loss of arc event may be based on detecting that the thyristor firing angle of the power controller of the electrode is at a limit. The limit may be a lower limit. The furnace power consumption parameter may comprise one or more of electrode power, electrode current, electrode voltage, reactive power, apparent power, power factor change, bus voltage amplitude, and bus voltage frequency. Determining a loss of arc event may comprise detecting a threshold change in the furnace power consumption parameter. The threshold change may comprise one or more of a drop in the electrode power by a threshold amount, a drop in the electrode current by a threshold amount, a rise in the electrode voltage by a threshold amount, a change in the reactive power by a threshold amount, a change in the apparent power by a threshold amount. Determining the loss of arc event may be based on detecting a threshold change in the furnace power consumption parameter while the thyristor firing angle of the power controller of the electrode is at a limit. The limit may be a lower limit. Moving the electrode may comprise lowering the electrode in the furnace in response to determining the loss of arc event. Moving the electrode may comprise raising the electrode in the furnace in response to re-ignition of the arc. Varying the thyristor firing angle may comprise setting the firing angle to a value to limit the amount of current in the electrode after re-ignition of the arc. Varying the thyristor firing angle, in response to determining the loss of arc event, may help control a current in the electrode. Coordinating moving the electrode with varying the thyristor firing angle may help one or more of expedite re-ignition of the arc, control an electrode power consumption parameter of the electrode, and expedite increasing the amount of power to the electrode to a select amount. Over a period of time after the re-ignition of the arc, the electrical power to the load may be decreased while the electric power to the electrode is increased. A second portion of the amount of power from the power supply may be caused to be consumed by other electrodes in response to determining the loss of arc event. The other electrodes may be caused to consume the second portion of the amount by increasing a voltage at the other electrodes. Determining the loss of the arc may comprise detecting the loss of the arc after it has occurred. The portion of the amount of power may be caused to be absorbed by the load which comprises an energy storage system. The portion of the amount of power may be the entire amount of power that had been received in the electrode from the power supply. The load may be caused to absorb the portion of the amount of power for only a period of time. The load may be allowed to dissipate stored energy before causing the load to absorb further power. Determining the loss of arc event may be based on the furnace power consumption parameter and the thyristor firing angle of the power controller of the electrode. Determining the loss of arc event may be based on detecting a threshold change in the furnace power consumption parameter while the thyristor firing angle of the power controller of the electrode is at a limit. The limit may be a lower limit. In response to re-ignition of the arc, the frequency of the electrical power may be returned to a same band from before the loss of arc event.

In an embodiment, a method for managing losses of an arc on an electrode in an electric furnace comprises monitoring for losses of the arc of the electrode, the electrode receiving an amount of power from a power supply to produce the arc; in response to detecting a first loss of the arc, causing a portion of the amount of power to be absorbed by a load; transitioning the portion of the amount of power back to the electrode in response to detecting the return of the arc; and waiting a period of time for the load to discharge a portion of energy it absorbed in response to the first loss of the arc, prior to causing a second portion of the amount of power to be absorbed by the load in response to detecting a subsequent loss of the arc.

In an embodiment, a system for stabilizing electrical power in an electric arc furnace powered by a power supply, comprises a load controller connected to a load and configured to regulate an amount of power from the power supply to the load; and a power dip compensation controller (PDC) for communication with the load controller, the PDC configured to determine a loss of arc event for an electrode of the electric arc furnace, cause the load to absorb a portion of the amount of power from the power supply during the loss of arc event, and one or more of cause the electrode to move to help re-establish an arc of the electrode, and cause a thyristor firing angle of a furnace power electronic control system to one or more of help expedite re-ignition of the arc and help control an electrode power consumption parameter of the electrode upon re-establishing the arc. The system may comprise the furnace power electronic control system. The system may comprise the thyristors of the furnace power electronic control system. The PDC may be configured to determine the loss of arc event based on one or more of a furnace power consumption parameter and the firing angle of the thryistors. The PDC may be configured to cause the portion of the amount of power absorbed by the load to be the amount of power received by the electrode prior to the loss of arc event. The load controller may be a thyristor controller configured to regulate the amount of power to the load. The PDC may be configured to vary the thyristor firing angle, in response to determining the loss of arc event, to help control a current in the electrode. The power dip compensation controller may be configured to cause the electrode to move and vary the thyristor firing angle at a related rate. The load may comprise a resistor. The resistor may be one or more banks of resistors. The load may comprise an energy storage system. The load controller may comprise a thyristor control system. The load may comprise a resistor having a delta configuration to help eliminate triplen harmonics generated by the thyristor control system. The load controller may comprise a rectifier transformer comprising a thyristor rectifier. The thyristor control system may comprise an alternating current voltage controller. The alternating current voltage controller may be is configured to draw unbalanced power from a power supply to compensate for a three-phase unbalanced power draw resulting from the loss of the arc. The PDC may be configured increase the supply voltage of other electrodes powered by the power supply to cause the other electrodes to consume a second portion of the amount of power the electrode had received prior to the loss of arc event.

In an embodiment, a system for stabilizing electrical power in an electric arc furnace powered by a power supply comprises a load controller configured to regulate an amount of power from the power supply to a load during a loss of arc event, the amount of power corresponding to an amount of power received at an electrode prior to the electrode losing its arc. The load controller may comprise a thyristor control system. The load may comprise a resistor having a delta configuration to help eliminate triplen harmonics generated by the thyristor control system. The load controller may comprise a rectifier transformer comprising a thyristor rectifier. The rectifier transformer and thyristor rectifier may be configured as a 6-pulse bridge rectifier. The PDC may be configured to cause the portion of the amount of power absorbed by the load to be the amount of power received by the electrode prior to the loss of arc event.

In an embodiment, a system for stabilizing electrical power in an electric arc furnace powered by a power supply comprises a load controller configured to regulate an amount of power from the power supply to a load during a loss of arc event, the amount of power corresponding to an amount of power received at an electrode prior to the electrode losing its arc. The rectifier transformer and thyristor rectifier may be configured as a 6-pulse bridge rectifier.

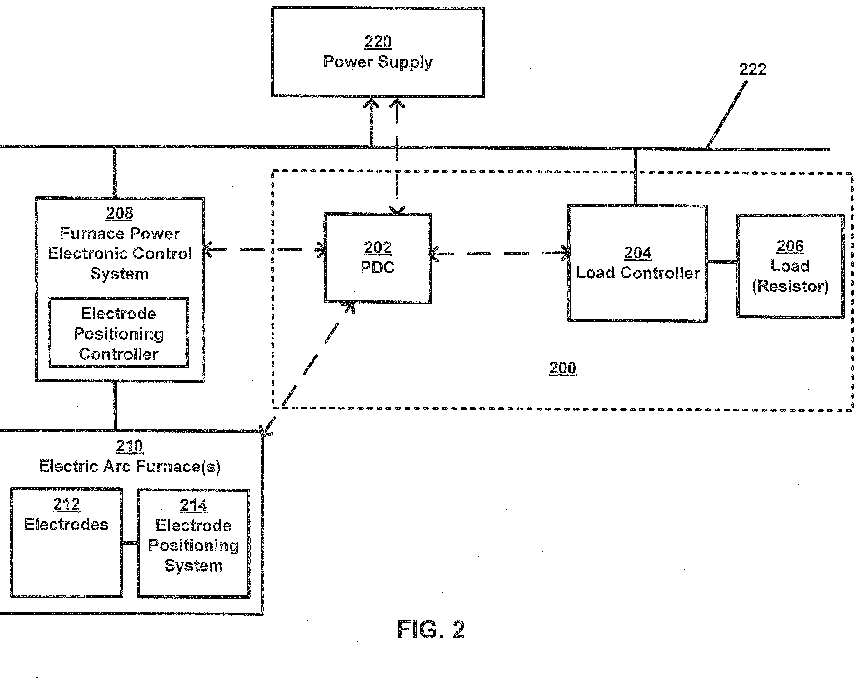

**FIG.** 2 shows a system 200 for stabilizing the power demand from a power supply 220 in response to a loss of arc in an arc furnace in accordance with an embodiment of the present disclosure. The system 200 comprises a power dip compensation controller (PDC) 202, a load controller 204, and a load 206. There is also a furnace power electronic control system 208. In an embodiment, the system 200 may include the furnace power electronic control system 208, such as when the PDC is integrated in the furnace power electronic control system 208.

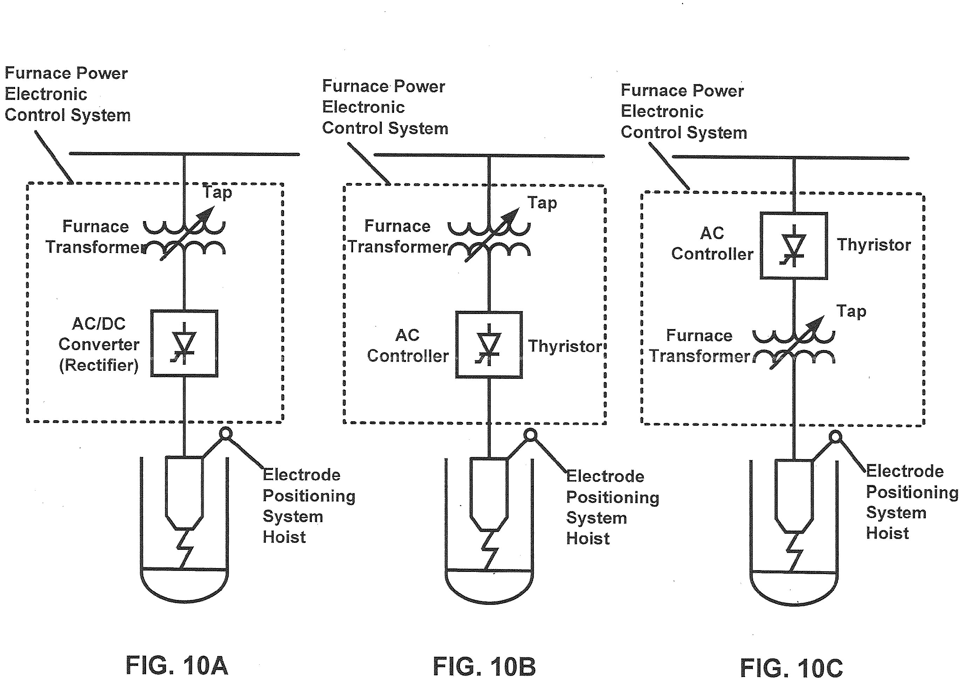

The furnace power electronic control system 208 is connected to the electric arc furnace 210 to control various aspects of the furnace and electrode operation. For example, the furnace power electronic control system 208 may be comprised of thyristor systems and a power control system which determines the firing angle of the thyristors to regulate the amount of power going to the electrodes. A furnace power electronic control system 208 may comprise a step-down transformer which converts the medium voltage from the power supply to a lower voltage for electrodes. For direct current (DC) furnaces, the furnace power electronic control system typically comprises a rectifier using thyristors. For alternating current (AC) furnaces, a furnace power electronic control system typically comprises thyristor voltage controllers that may be at the primary or secondary of the step-down transformer. The electrode positioning controller interfaces with the electrode positioning system 214 in the electric arc furnace 210 to control the raising and lowering of the electrodes 212. The furnace electrode positioning controller may be part of the furnace power electronic control system 208 or it may be a separate controller that interacts with the furnace power electronic control system 208. The furnace transformer tap can be controlled by an operator or through an automatic control system in conjunction or as part of the furnace power electronic control system 208 or electrode positioning controller. FIGS. 10A, 10B, and 10C show representative examples of such furnace power electronic control systems in accordance with an embodiment of the present disclosure.

The power supply 220 may comprise a generator, a supply line to a utility grid, and potentially a Static VAr Compensator System (SVC). The load 206 and load controller 204 are connected to the power supply 220 in parallel with the furnace. The load 206 and load controller 204 may be connected to the furnace power supply upstream from the furnace power electronic control system at a medium voltage bus 222. Alternately the load 206 and load controller 204 may be connected downstream of the furnace transformer at lower voltages. The load 206 may comprise a resistor that is in parallel with one or more electrode(s) 212, or one or more electric arc furnace(s). The load controller 204 may be connected to the resistor to cause a portion of the power from the bus 222 to be absorbed by the resistor 206, and to regulate the power to the resistor 206. The load controller 204 may comprise a thyristor or a thyristor valve system. Alternatively, the load controller 204 could be any other form of power electronic converter such as an insulated-gate bipolar transistor (IGBT)-based inverter.

Instead of just a resistor (or banks of resistors), or as an alternative to a resistor (or banks of resistors), the load may comprise an energy storage system, such as a flywheel, a supercapacitor, or a battery comprising electro-chemical cells (such as a lithium ion battery). Whereas a resistor automatically dissipates its absorbed energy into the environment as waste heat, an energy storage system retains its energy for controlled use at a later time for a particular purpose. An energy storage system may be connected to the power supply using bidirectional power converters to allow the energy storage system to release its stored energy back into the power supply at a later time. Whatever type of load is used, however, it must be able to react sufficiently quickly to the power imbalance caused by an LOA.

The system and method of the present disclosure may comprise controls (including software) to be integrated with existing furnace control components to help expedite re-establishing an arc, maintaining the arc, and/or returning the electrode power to the desired power level. Reducing the amount of time required to re-establish an arc and return the electrode to original power levels helps reduce the amount of energy the load must be configured to absorb each time there is an LOA. This, in turn, helps minimize the size of the energy consuming and/or storing element of the load, thereby saving costs. In an embodiment, the system and method may be configured to re-establish an arc within 1 minute of a LOA, and the load may be sized to absorb the amount of energy consumed by that electrode in less than one minute when the electrode operates at its normal operating setpoint power. In an embodiment, the system and method may be configured to re-establish an arc within several seconds of a LOA occurrence, and the load may be sized to absorb the amount of energy that would have otherwise been consumed by that electrode in those few seconds. Using control systems to more quickly re-establish an arc helps reduce the capacity of the load (one of the main drivers in cost of the system).

The PDC 202 may be integrated with or embedded in the furnace power electronic control system 208. Alternatively, the PDC may reside in a separate box outside of, but be in communication with, the furnace power electronic control system including furnace tap controller and electrode positioning controller which may be integrated in one unit or several controllers that communicate with the PDC 202 in a distributed control architecture or any variations thereof. In any case, the PDC 202 may interact with the modules of the furnace power electronic control system 208 and other systems to help expedite re-establishing an arc, maintaining the arc, and/or returning the electrode power to desired levels such as the levels prior to the LOA. The PDC 202 may also be in communication with each of the power supply, the load controller, and the other electric arc furnace(s) or electrodes. The PDC 202 is configured to receive operation information, and may continuously receive that information. The PDC 202 may receive that operation information from a number of sources such as the furnace power electronic control system 208, the power supply 220, and the electric arc furnace 210 (including from sensors in the electric arc furnace environment). That information can include, for example, the power consumption setpoint of the furnace, the actual amount of power being consumed by the furnace, and the furnace power electronic controller system status. The furnace power electronic controller system status may comprise such information as the firing angle of the thyristors, the furnace transformer tap voltages, the electrode impedances, and electrode positions. The PDC 202 may also be in communication with the power supply to receive its status and other information such as the amount of power being generated by the power supply. The operation information may include information about furnace power consumption parameters, comprising electrode power, electrode current, electrode voltage, apparent power, reactive power, power factor change, bus 222 or electrode voltage frequency and/or voltage amplitude, or other related parameters.

An embodiment of the present disclosure may only comprise a load controller for connecting to a bus and a load, and configured to control the load. The load controller may obtain operation information from the bus 222 and use that operation information to determine a loss of arc event. The operation information may be the voltage amplitude and/or voltage frequency on the bus 222. In response to determining a loss of arc event, the load controller may automatically control the load to cause the load to receive power from the bus 222 to help stabilize the power demand from the power supply. Such an embodiment would not comprise a centralized controller such as a PDC to coordinate the load controller / load in conjunction with a furnace power electronic control system. In such an embodiment, the furnace power electronic control system may be configured to operate the furnace on the basis that a load controller and a load are being used to stabilize the power demand from the power supply during a loss of arc event.

The PDC 202 may use information about the furnace power consumption parameters, including changes in one or more of such parameters, to determine a loss of arc event. For example, the PDC 202 may determine a loss of arc event in response to a change in one or more furnace power consumption parameters by a threshold amount. The threshold change(s) in the furnace power consumption parameter to result in determining a loss of arc event may be one or more of a drop in the electrode power, a drop in the electrode current, a rise in the electrode voltage, and a change in the reactive power or a change in a related parameter. For example, a start of a change in the electric power frequency (such as a higher frequency and/or higher voltage) may indicate a mismatch between the available power supply and the furnace power draw and be used to determine a loss of arc event. The PDC 202 may alternatively, or in combination with information about one or more furnace power consumption parameters, use information about the thyristor firing angle of the electrode power controller to determine a loss of arc event. The PDC 202 may determine a loss of arc event based on the thyristor firing angle of the electrode power controller being at a limit, such as a lower limit. For example, if the power of the electrode is decreasing but the thyristor firing angle is already at a lower limit, the PDC 202 may determine that a loss of arc event is imminent and unavoidable because the thyristor firing angle cannot be further lowered to increase the current in the electrode.

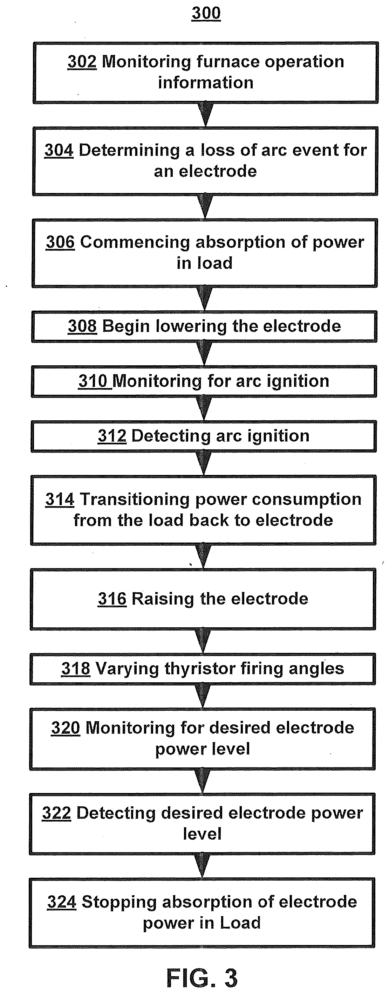

**FIG.** 3 shows a flow chart of an example method 300 for stabilizing power consumption in an electric arc furnace in accordance with an embodiment of the present disclosure. Stabilizing electrical power refers to balancing the electrical power being supplied by a power supply to one or more electric arc furnaces on the one hand, with the electrical power being consumed by those one or more electric arc furnaces on the other hand. When stabilized, the amount of power being supplied equals, or falls within an acceptable change of, the amount of power being consumed. The method 300 may be performed using an arc furnace environment and system consistent with the environment and system 200 shown in FIG. 2. The method comprises monitoring 302 furnace operation information to determine a loss of arc event for an electrode. In response to determining 304 a loss of arc event for an electrode, a load is caused to absorb 306 an amount of power that is similar to the amount of power consumed by the electrode prior to it losing the arc. As a result, the combined power consumption provided by the load and the rest of the furnace is not materially different from the pre-LOA event power levels. This avoids, for example, having to depower the power supply by releasing power plant steam pressure, or large frequency power swings. The load may be connected to a load controller for controlling the amount of power the load absorbs/consumes. In response to determining the loss of arc event, the electrode that lost its arc is lowered 308 into the furnace to expedite arc restrike. Arc ignition is monitored 310, and upon detection 312 that the arc re-ignited, power consumption is transitioned 314 back to the electrode from the load and the electrode is raised 316. As the electrode is raised, the firing angles of the thyristor may be adjusted 318 to help control an electrode power consumption parameter, such as the current passing through the electrode. In an embodiment, the thyristor firing angles are increased. Limiting the current through adjusting the position of the electrodes may also help prevent exceeding the power supply limits. The thyristor firing angles may also be coordinated with the adjusting of the electrode position. The power consumed by the electrode is then monitored 320 to detect 322 when it has reached a desired power level such as a pre-LOA power level. Once the desired power levels are detected, the load stops absorbing 324 power altogether.

During regular operation, the PDC 202 may determine a loss of arc event. Determining a loss of arc event may include determining that a loss of arc has already occurred. Determining a loss of arc event may also include determining that a loss of arc is likely to occur prior to the actual arc of the electrode being fully lost. In this way, the PDC 202 is anticipating the full loss of the arc. The loss of arc event may commence upon the arc being fully lost and end upon the arc being re-established and the power level of the electrode returning to the desired power level such as its normal operating setpoint. The normal operating setpoint may be the power level the electrode was at immediately prior to the loss of arc event.

The PDC 202 may perform a number of steps to determine a loss of arc event. In an embodiment, the PDC 202 monitors 302 furnace operation information by receiving and analyzing information concerning the operation status of the furnace and the power supply. Receiving and analyzing such information may permit the PDC 202 to more quickly, and/or with greater certainty, determine that there has been, or will be, an actual loss of arc. This is in contrast to only monitoring the current and voltage at the electrode 212, itself, to detect that there has indeed been a loss of arc. By only monitoring such information, a loss of arc may not be detected until well after it has occurred. Fast detection of a loss of arc, or determining that a loss of arc is imminently about to occur, can help with more quickly activating the load so as to avoid a dip in power consumption that is sufficiently large to have a negative effect on the power supply or furnace production.

In an embodiment, the PDC 202 may determine a loss of arc event based on detecting the furnace power consumption dipping below the setpoint, while also detecting that the furnace power electronic control system 208 is not taking any action at that time to compensate for the dip in furnace power consumption. More specifically, direct measurement of furnace power consumption as well as a confirmation of the power control range of the furnace power electronic control system may be used by the PDC 202 to determine a LOA. If the measured electrode power drops while the measured electronic control variable (namely, the thyristor firing angle) is at or past a threshold (such as a limit), an LOA occurrence is likely. The PDC 202 may, upon receiving such information, determine that there has been a LOA event and cause a number of actions to be taken in response. At its lower limit, the thyristor firing angle transfers the maximum amount of power to the load. Added measures such as rate of change of power or other methods of identifying arc signature may be used by the PDC 202 to help more quickly determine that there has been or will be a LOA. For example, detecting a reduction in current or change in voltage or power factor, or detecting reactive power, and comparing these values against expected or historical operating values, can be used to determine an onset of loss of arc. In an embodiment, detecting a loss of arc may consist of detecting a threshold change in the current at the electrode, such as the electrode current going to zero, or almost zero, or a similar nominal value.

In response to determining a loss of arc event for an electrode 212, the PDC 202 causes a portion of the amount of power previously being received by the electrode 212 to produce the arc, to be absorbed 306 by the load 206. The PDC 202 does this by controlling the load controller 204 which regulates the power to the load 206. The portion of the amount of power the load 206 is permitted to absorb may be the entire amount of power that the electrode 212 had been receiving prior to the LOA. The PDC 202 may issue a command to the load controller 204 for the load 206 to begin drawing power from the power supply 220. The command may require the load to draw a sufficient amount of power from the power supply 220 so that the sum of the power (a) still being consumed by the electrode 212, and (b) now being consumed by the load 206, is similar to the amount of power that was being consumed by the electrode 212, alone, immediately prior to the LOA. If an energy storage system is used instead of a resistor for the load 206, it draws power by charging the storage system and may send a status signal back to the power supply 220 and/or PDC 202.

In response to detecting a loss of arc event for an electrode 212, the electrode 212 is lowered 308 in the furnace 210 to help re-establish the arc. The furnace power electronic control system 208 may automatically cause the electrode 212 to lower in response to the loss of arc. The PDC 202 may interact with the furnace power electronic control system 208 to help expedite lowering the electrodes 212 (potentially at the maximum speed possible) to more quickly re-establish the arc. The PDC 202 may also cause the firing angle of the thyristors to increase to prevent current overshoots once the arc restrikes.

Once the electrode arc is re-established, the electrode 212 is raised 316 in the furnace. The electrode 212 may be raised automatically by the furnace control system 208. The PDC 202 may monitor for the re-establishment of the arc 312 using furnace operation information such as the electrode power and other characteristics such as current. Once the PDC 202 detects that the arc has been re-established, the PDC 202 may interact with the furnace control system to expedite raising the electrodes in the furnace. The PDC 202 may also coordinate raising the electrode, varying the thyristor firing angle, and reducing the amount of power being consumed by the load 206.

At the time of arc restrike for the electrode 212, the amount of current passing through the electrode 212 may be higher than the amount of current that would normally be present in that electrode 212 during regular operation. This is due to the combination of low arc resistance and the power supply 220 continuing to provide the same power output that it had provided immediately prior to the loss of arc. The electrode 212 was moved closer to the bath of material to reduce the air gap resistance. This helps re-establish the arc more quickly, but when the arc is re-established the electrode 212 experiences a spike in current. Unless addressed, the current may be sufficiently high to damage equipment or lead to a protective overload activation which trips the furnace breakers.

To help limit the magnitude of a current spike, the voltage at the electrode 212 may be reduced. For example, a transformer tap changer may be used to reduce the electrode voltage. However, this is relatively slow and causes additional wear on the tap changer. Alternately, a current limit mode may be activated in the furnace power electronic control system 208. The current limit mode may be activated by the PDC 202 upon either detecting a high current through the electrode, or detecting conditions that could result in high current through the electrode 212.

The various operations performed by the furnace power electronic control system 208 such as electrode positioning and thyristor firing angle may be coordinated by the PDC. For example, the PDC 202 may coordinate moving the electrode with varying the thyristor firing angle to help one or more of expedite re-ignition of the arc, control an amount of current in the electrode 212, and expedite increasing the amount of power to the electrode 212 to a select amount. The PDC 202 may be configured to move the electrode more quickly upon determining a loss of arc event than the electrode 212 would typically be moved by a conventional furnace power electronic control system 208 including the electrode positioning system 214. As an electrode 212 rises within the furnace 210, the firing angle of the thyristor may be adjusted. The adjustment may comprise varying the thyristor firing angle over a period of time. Varying the thyristor firing angle in a particular manner may help control an electrode power consumption parameter in the electrode 212, such as the electrode current. The control may be to limit the electrode current to at or below a threshold current amount. The combination of adjusting the position of the furnace electrode 212 and varying the thyristor firing angle can help cause the power of the electrode 212 to progressively increase over a period of time. As the electrode 212 rises in the furnace, arc resistance increases. Once the electrode power returns to what it was prior to the loss of arc, the measures taken to limit the magnitude of electrode current may be stopped. Control of electrode power may also be fully returned to the furnace power electronic control system 208, and the load 206 may be operated to no longer absorb any power from the power supply 220.

If the load comprises an energy storage system, when not responding to an LOA the stored energy may be discharged through the bidirectional converter to the power source 220, and used by a load on the bus 222, including an arc furnace. The rate at which stored energy is discharged may be slower than the rate at which it was accumulated since LOA events are typically several minutes apart. Some of the stored energy may need to be allowed to discharge by waiting a period so the energy storage system has sufficient capacity to again absorb power during a subsequent LOA event.

In an embodiment, the power consumed by other electrodes within the same furnace, or electrodes in other furnaces, may be increased to consume some of the power that would have otherwise been consumed by the electrode but for the loss of arc. To increase the power consumption of other electrodes, the voltage at those electrodes may be increased. This may be accomplished by causing the Static Var Compensator (SVC) to raise the voltage.

After re-ignition of the arc, the electrical power from the power supply 220 to the load 206 is eventually inhibited such that the load 206 stops absorbing power. The PDC 202 may control the load controller to cause the load 206 to stop absorbing power. All of the power to the load 206, or even any power to the load 206, is not necessarily immediately stopped upon re-ignition of the arc. Rather, the power to the load 206 may be varied (including steadily reduced) over a period of time until the arc has been re-established and it is at a normal operating power level, at which point the power to the load 206 may be completely inhibited. As the power to the load 206 is varied, the power to the electrode that had lost its arc, and/or other power consuming elements, may be varied in a manner that is inversely proportional to the power to the load 206. For example, the power to the load 206 may be steadily decreased until no power is going to the load 206 after a period of time. The power previously absorbed by the load 206 may be directed elsewhere, such as to the electrode which has re-gained its arc, or other electrodes that are already receiving power from the power supply. The electrical power may be transitioned from the load 206 such that the electrical power to the load 206 is decreased at a rate similar to the rate at which the electrical power to the electrode is increased. In this way, the total power consumed as between the load 206 and the electrode remains relatively constant (within an acceptable range) so as to stabilize the power within the larger system which includes the power supply. The power absorbed by the load 206 offsets the power no longer being consumed by the electrode due to a loss of the arc. Transitioning the power from the load 206 to the electrode also helps re-establish power levels at the electrode to desired levels, such as what they were before the loss of arc, and/or to the regular operating setpoint power levels. Inhibiting power to the load 206, including transitioning the power from the load 206 to the electrode may be performed as quickly as possible to help limit the amount of time that the load 206 absorbs power.

A period of time may need to be allowed to pass before the load 206 can be again used to respond to a LOA event so as to permit the load 206 to dissipate stored energy. The PDC may monitor that time period.

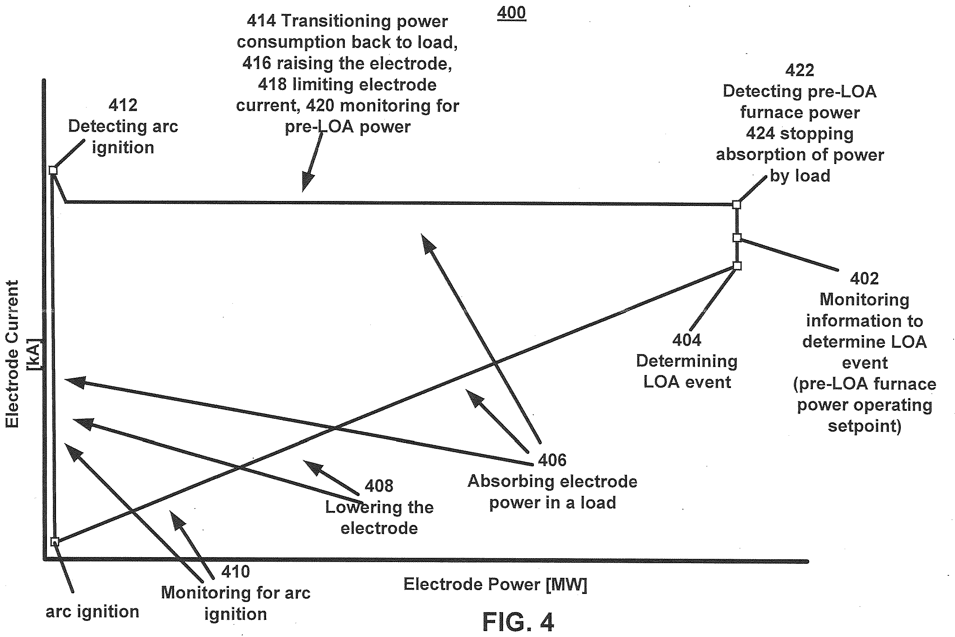

**FIG. 4** shows a representative power voltage current (PVC) diagram 400 which plots the power in megawatts (MW) being consumed by an electrode against the amount of current in kiloamps (kA) passing through the electrode, for each of the steps in the flowchart of FIG. 3, in accordance with an embodiment of the present disclosure.

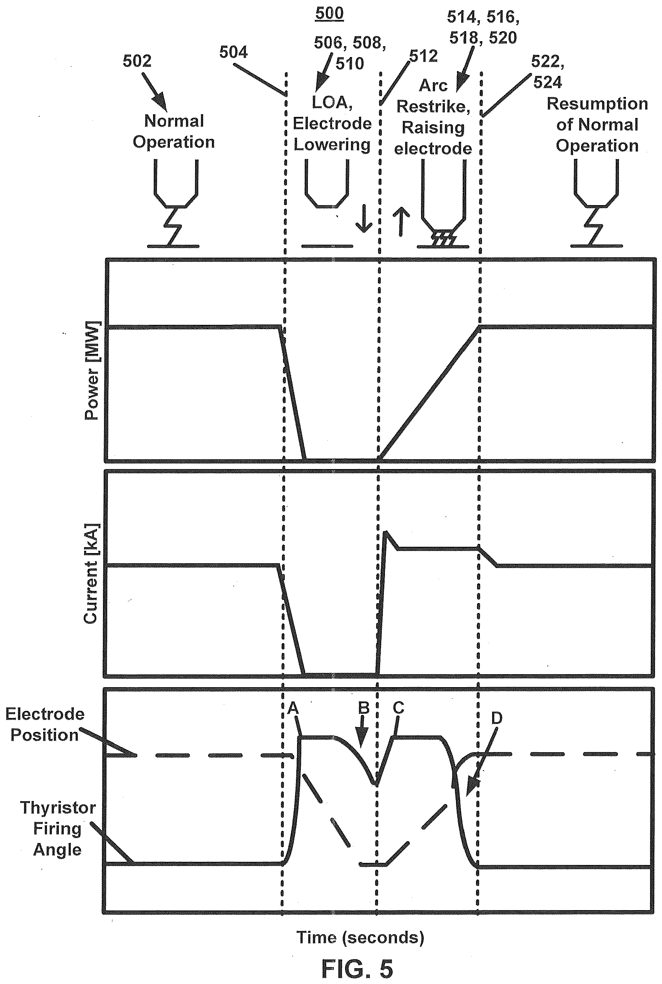

**FIG. 5** shows separate graphs for the amount of power consumed by, and the amount of current passing through, the electrode of FIG. 4 over a period of time for each of the steps in the flowchart of FIG. 3, in accordance with an embodiment of the present disclosure. FIG. 5 also shows a graph of a representative thyristor firing angle of an electrode power controller and an electrode position, for the various steps in the flowchart of FIG. 3, in accordance with an embodiment of the present disclosure.

While monitoring 402, 502 for a loss of electrode arc, the electrode is consuming power at an operating setpoint power and current. When a loss of arc event is determined 404, 504 the power consumed by the electrode may not have materially decreased from pre-LOA levels, although there may be a slight drop in electrode current. After the LOA is detected, the power and current at the electrode may quickly drop to zero, then stay at zero for a period of time. After detection of the LOA event, the load 206 is controlled to begin absorbing power 406, 506. This is power that would have otherwise been consumed by the electrode but for the LOA. The load 206 may be controlled to increase the amount of power it is absorbing at a rate that is close to or the same as the rate at which the electrode's power consumption is decreasing. In this way, the total power consumption is maintained so that it corresponds to the steady power output of the power supply. By matching power output, changes to the operating power demand of the power supply are avoided.

After determining the LOA event, the electrode is lowered 408, 508, and the arc is monitored for ignition 410, 510. Upon arc ignition, the electrode may experience a large spike in current. The power consumed by the electrode upon ignition, however, increases at a slower rate. After detection of the arc ignition 412, 512, power consumption is transitioned from the load 206 back to the electrode 414, 514 so that the cumulative power consumed by the load 206 and the electrode remains relatively constant. After detection of the arc ignition 412, 512, the electrode is also raised in the furnace 416, 516, and the current through the electrode is limited 418, 518. To limit electrode current, the thyristor firing angles for the electrode may be coordinated with raising of the electrode. For example, as the electrode rises, the firing angles may be adjusted.

As shown in FIG. 5, immediately after the loss of the arc, the thyristor firing angle may be caused to go high A to protect against a high current spike in the electrode once the arc reignites. This step A is optional. If arc fails to reignite after a period of time, the thyristor firing angle may be lowered to help re-ignite the arc. Once the arc reignites, the thyristor firing angle may be set to a high value C (potentially its upper limit) so as to limit the current in the electrode thereby protecting against a high current spike in the electrode. Once the current in the electrode has stabilized after a period of time, the thyristor firing angle may be lowered D to help increase the power of the electrode. The lowering of the thyristor firing angle may be coordinated or timed with the raising of the electrode, since raising the electrode increases the arc resistance thereby lowering the current in the electrode, and the lower current offsets the increase in current resulting from lowering the thyristor firing angle. In this way, the firing angle of the thyristor and the electrode position may be related. In an embodiment, the rate at which the electrode is lowered is the maximum rate permitted by the electrode positioning system. In an embodiment, the rate at which the electrode is raised depends upon the thyristor firing angle. In another embodiment, the rate at which the electrode is raised depends upon one or more of the thyristor firing angle, the electrode current, and the electrode power.

The electrode power consumption is then monitored 420, 520 to determine whether it has reached a desired power level. Once the desired power consumption levels are detected 422, 522, the load 206 is caused to stop absorbing power.

In an embodiment, electrodes from other arc furnaces, or other electrodes within the same arc furnace, can be used to absorb a portion of the power that had previously been consumed by the electrode prior to experiencing a loss of arc. This may help if there are mechanical or process limitations on electrode maximum rise speed. The PDC may determine the power draw of the other electrodes and compare against the power output of their power supply. If the other electrodes have the capacity to consume more power, then the PDC may signal the furnace power electronic control systems to temporarily reduce the electrode firing angle of the electrodes. Alternatively or in addition, the PDC may cause the electrode positing system to move the other electrodes in order to increase their arc power. Either option causes a temporary increase in power consumption by the other electrodes, and can be controlled so that the overall power drawn by all loads from the power plant is maintained at the pre-LOA level even though the load power draw is stopped before the electrode that experienced the LOA reaches the pre-LOA power level. Once this electrode reaches the desired power level, the increase in temporary power consumption by the other electrodes may be stopped by the PDC.

Optionally, to assist with recovering from a LOA, the PDC may cause the supply voltage to be raised to increase the power consumed by other electrodes which still have an arc. This may be accomplished by changing the furnace transformer tap using a mechanically operated on-load tap changer. Alternatively, to more quickly raise the voltage, the supply bus voltage at the primary of the furnace transformer may be increased. This may be accomplished by, for example, a temporary increase of the voltage setpoint of a Static Var Compensator (SVC) or Statcom, by switching on a capacitor bank, or by increasing power supply generator excitation if available. As an SVC or Statcom utilizes electronic switching, the voltage increase will be fast and helps avoid wear of the transformer mechanical tap changer. A voltage increase of 5%, for example, may increase power on the other electrodes that are not experiencing an LOA by an amount that can be as high as 10 to 15% or more. Increasing the voltage can help reduce the amount of power the load 206 needs to absorb to stabilize the power in power system in response to a LOA. The voltage increase is temporary, and the voltage setpoint may be returned to a normal or the original setpoint as the arc is recovered.

A system and method in accordance with this disclosure helps avoid appreciable change in power consumption, from the perspective of the power supply, while an electrode experiences a loss of arc. Accordingly, this system and method may help avoid needing to decrease the power output of a power plant which, in-turn, can help avoid or reduce the slow ramp up of power to the furnace, and the furnace operating at sub-optimal power levels.

There may be some instances where a power consumption dip due to loss of arc cannot be avoided. For example, the load 206 may not have sufficient capacity to absorb the total amount of power required to re-establish the arc in the electrodes. In such cases, the method and system of the present disclosure may still be able to prevent a power consumption dip for a short period of time after determining that there has been a loss of arc. During the time between determining there has been a loss of arc, and actually experiencing a power consumption dip, the power output of the power generation system can be ramped down to a new steady state. In an embodiment, upon determining that there has been a loss of arc and that a power consumption dip is imminent, the PDC sends a signal to the power generation system to warn of an impending power dip.

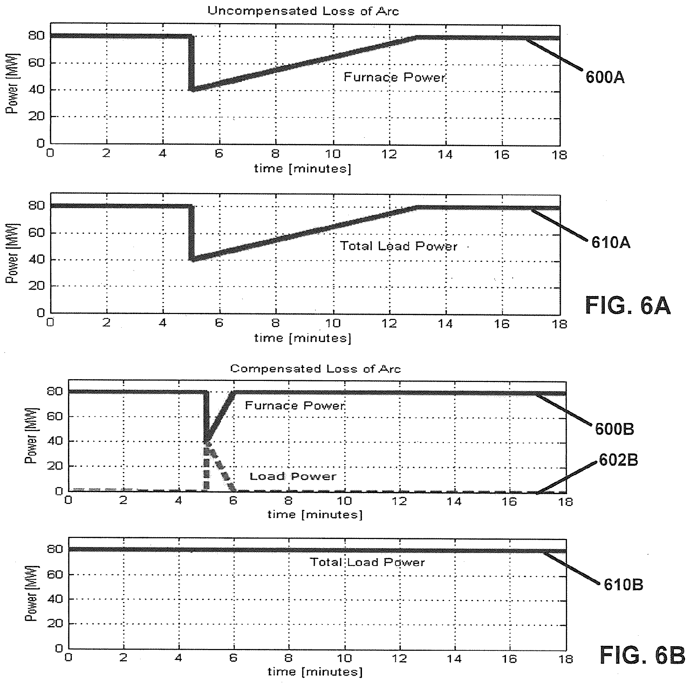

**FIG. 6A** shows example plots of electrode consumption power 600A and total load power 610A (as observed by a power supply) for a loss of arc event in a conventional electric arc furnace. The loss of arc starts at the 5-minute mark. Upon experiencing the loss of arc, the conventional furnace electrode power consumption and total load power consumption both dropping by half (40 MW). The power consumptions does not return to pre-LOA levels until 8 minutes later at the 13 minute mark.

**FIG. 6B** shows example plots of furnace consumption power 600B and total load power 610B for a loss of arc event in an electric arc furnace in accordance with and embodiment of the present disclosure. The loss of arc again starts at the 5-minute mark. Upon experiencing the loss of arc, however, the power consumed by the load as shown by the load power plot 602B increases from 0 to 40 MW. That 40 MW increase offsets the 40 MW drop in power consumption as a result of the LOA. From the perspective of the power supply, the total load power remains the same throughout the LOA event. And since the power supply operations did change to reduce power output, the furnace electrode power consumption returned to pre-LOA levels within 1 minute.

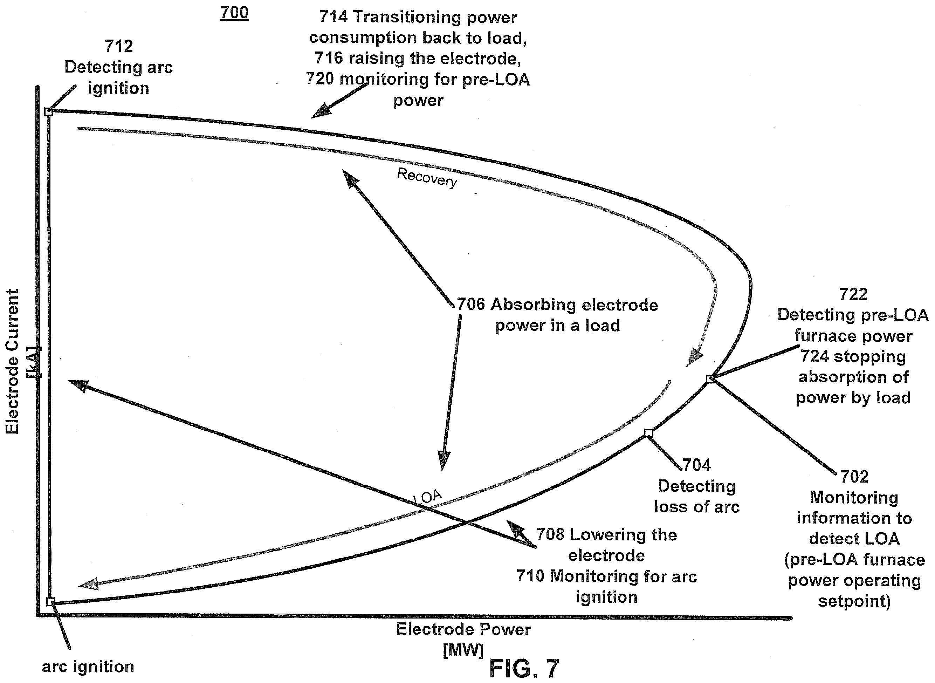

**FIG.** 7 shows a representative power voltage current diagram similar to that of FIG. 4, but for an arc furnace without any furnace power electronic controls in accordance with an embodiment of the present disclosure. Since there are no furnace electronic controls, the step of limiting the current through the electrode 318 of method 300 does not occur when stabilizing the power during a LOA event in such a furnace. Furthermore, detection of an LOA event is more difficult and would occur later after the event.

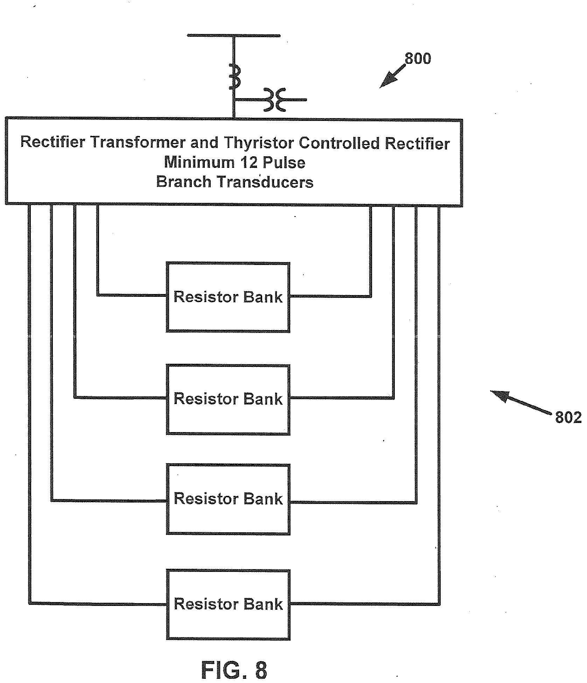

**FIG.** 8 shows an embodiment of a load controller 800 and a load 802 in accordance with an embodiment of the present disclosure similar to the load controller 204 and load 206 shown in FIG. 2. The load 802 comprises resistor banks, and the controller 800 is a thyristor control system comprising a rectifier transformer with a thyristor controlled rectifier. There are several different ways thyristor-controlled resistors can be configured and connected to the thyristor control system. As shown in FIG. 8, the thyristor-controller resistor can comprise several resistor banks. The resistor banks are connected to a direct current (DC) side of a thyristor rectifier of the rectifier transformer. The DC thyristor rectifier and associated rectifier transformer can be configured in a number of ways, such as a 6-pulse bridge rectifier. Multiple series or parallel-connected 6-pulse bridge rectifiers and a multi-winding transformer can be used to achieve a higher pulse number thereby reducing the harmonic currents that could potentially be generated by a load without such a harmonic-inhibiting configuration. The rectifier-type system can provide a three-phase balanced load on the AC power system and can be used in cases such as DC furnaces, where a loss of arc may be a three-phase-balanced event.

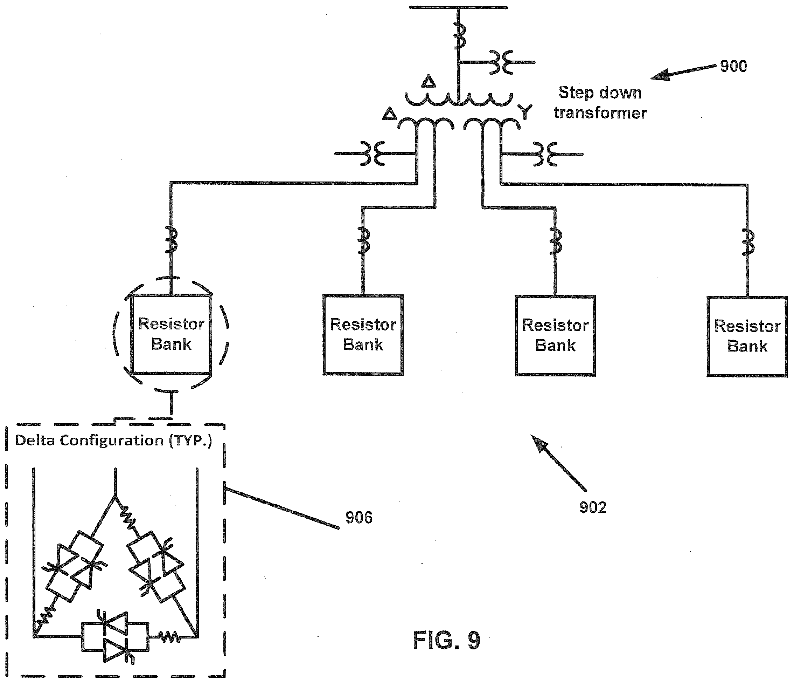

**FIG.** 9 shows a load controller 900 and a load 902 in accordance with another embodiment of the present disclosure similar the load controller 204 and load 206 of FIG. 2. The load 902 comprises resistor banks, and the thyristor control system 900 is an AC voltage controller. Such a load 902 and load controller 900 can be controlled to draw unbalanced power from a power supply to compensate for the three-phase unbalanced power draw that may occur as a result of a loss of arc in an AC furnace. The resistor banks may have a delta configuration 906, with the delta connection on the secondary side of the step-down multi-winding transformer of the AC voltage controller. Such a delta configuration 906 may help eliminate triplen harmonics generated by the thyristors that used for phase angle control. By using different winding configurations for the step down transformer and different connections to the resistor bank, such as the Delta-Wye-Delta connection as shown in FIG. 9, it may help reduce harmonic current for the 5th and 7th harmonics typically generated in the primary of the step down transformer. A higher number of windings may also be used to help reduce harmonic current for further higher order hamonics. If harmonics are not an issue for the power system, and the supply voltage is not too high, a transformer-less thyristor control system may be used.

**FIGS. 10A, 10B,** and **10C** each show a different configuration for a furnace power electronic control system connected to and for controlling an electrode and the electrode positing system including a hoist, all in accordance with an embodiment of the present disclosure. Other configurations exist. The system and method of the present disclosure may be incorporated or used with such furnace power electronic control systems, although it can also be implemented in the absence of electronic control and only to interact with an electrode positioning system alone.

## Claims

1. A method for stabilizing electrical power for a loss of an arc of an electrode (212) in an electric arc furnace (210), the electrode (212) receiving an amount of electrical power from a power supply (220) to produce the arc, the method comprising:
determining a loss of arc event for an electrode (212);
causing for a limited period of time, a portion of the electrical power from the power supply (220) to be stored or absorbed by a load (206);
expediting movement of the electrode (212) to help expedite re-ignition of the arc within the limited period of time and help control an electrode power consumption parameter of the electrode (212); and
after re-ignition of the arc within the limited period of time, inhibiting a portion of the electrical power from going to the load (206).

2. The method of claim 1, wherein one or more of a furnace power consumption parameter and a thyristor firing angle of a power controller of the electrode (212) are used to determine the loss of arc.

3. The method of any one of claims 1 or 2, further comprising, in response to determining the loss of arc event, varying the thyristor firing angle to one or more of help expedite re-ignition of the arc and help control an electrode (212) power consumption parameter of the electrode (212).

4. The method of any one of claims 1 to 3, further comprising storing the portion of the amount power in the load (206) as energy and releasing that energy into the power supply (220).

5. The method of any one of claims 1 to **4,** further comprising obtaining the furnace power consumption parameters from one or more of a furnace power electronic control system (208), the power supply (220), and the electric arc furnace (210).

6. The method of any one of claims 1 to 5, wherein determining the loss of arc event is based on detecting that the thyristor firing angle of the power controller of the electrode (212) is at a limit.

7. The method of claim 6, wherein the limit is a lower limit.

8. The method of any one of claims 1 to 7, wherein determining the loss of arc event is based on detecting a threshold change in the furnace power consumption parameter while the thyristor firing angle of the power controller of the electrode (212) is at a lower limit.

9. The method of any one of claims 1 to 8, wherein moving the electrode (212) comprises lowering the electrode (212) in the furnace (210) in response to determining the loss of arc event.

10. The method of any one of claims 1 to 9, wherein moving the electrode (212) comprises raising the electrode (212) in the furnace (210) in response to re-ignition of the arc.

11. The method of any one of claims 1 to10, wherein the portion of the amount of power is caused to be absorbed by the load (206) which comprises an energy storage system.

12. A system (200) for stabilizing electrical power, comprising:
a load (206) configured for connecting to an electric arc furnace (210) powered by a power supply (220), the load (206) sized to store or absorb electrical power from the power supply (220) for a limited period of time;
a load controller (204) configured to regulate an amount of the electrical power received by the load (206) from the power supply (220); and
a power dip compensation controller (PDC) (202) for communication with the load controller (204) and a furnace power electronic controller system (208), the PDC configured to
determine a loss of arc event for an electrode (212) of the electric arc furnace (210),
cause the load (206) to store or absorb a portion of the amount of the electrical power from the power supply (220) during the loss of arc event,
expedite movement of the electrode to more quickly re-establish an arc of the electrode (212) prior to the load (206) receiving its full energy capacity during the limited period of time, and
cause a thyristor firing angle of the furnace power electronic controller system (208) to help expedite re-ignition of the arc within the limited period of time and help control an electrode power consumption parameter of the electrode (212) upon re-establishing the arc.

13. The system of claim 12, further comprising the furnace power electronic control system (208).

14. The system (200) of claim 13, further comprising thyristors of the furnace power electronic control system (208).

15. The system (200) of claim **14,** wherein the PDC is configured to determine the loss of arc event based on one or more of a furnace power consumption parameter and the firing angle of the thryistors.

16. The system (200) of any one of claims 12 to 15, wherein the PDC is configured to cause the portion of the amount of power absorbed by the load (206) to be the amount of power received by the electrode (212) prior to the loss of arc event.

17. The system (200) of any one of claims 12 to 16, wherein the load controller (204) is a thyristor controller configured to regulate the amount of power to the load (206).

18. The system (200) of claim 17, wherein the PDC is configured to vary the thyristor firing angle, in response to determining the loss of arc event, to help control a current in the electrode (212).

19. The system (200) of any one of claims 12 to 18, wherein the power dip compensation controller (202) is configured to cause the electrode (212) to move and vary the thyristor firing angle at a related rate.

20. The system (200) of any one of claims 12 to 19, wherein the load (206) comprises a resistor.

21. The system (200) of claim 20, wherein the resistor is one or more banks of resistors.

22. The system (200) of any one of claims 12 to 19, wherein the load (206) comprises an energy storage system.

23. The system (200) of any one of claims 12 to 22, wherein the PDC is configured increase the supply voltage of other electrodes powered by the power supply (220) to cause the other electrodes to consume a second portion of the amount of power the electrode (212) had received prior to the loss of arc event.

## Patentansprüche

1. Verfahren zum Stabilisieren einer elektrischen Leistung bei einem Ausfall eines Lichtbogens einer Elektrode (212) in einem Lichtbogenofen (210), wobei die Elektrode (212) eine Menge an elektrischer Leistung von einer Leistungsversorgung (220) erhält, um den Lichtbogen zu erzeugen, wobei das Verfahren umfasst:
Bestimmen eines Lichtbogenausfallereignisses für eine Elektrode (212);
Veranlassen, dass für einen begrenzten Zeitraum ein Teil der elektrischen Leistung aus der Leistungsversorgung (220) von einer Last (206) gespeichert oder absorbiert wird;
Beschleunigen einer Bewegung der Elektrode (212), um eine Wiederzündung des Lichtbogens innerhalb des begrenzten Zeitraums zu beschleunigen und ein Steuern eines Leistungsverbrauchsparameters der Elektrode (212) zu unterstützen; und
nach der Wiederzündung des Lichtbogens innerhalb des begrenzten Zeitraums, Verhindern, dass ein Teil der elektrischen Leistung zu der Last (206) gelangt.

2. Verfahren nach Anspruch 1, wobei einer oder mehrere von einem Ofenleistungsverbrauchsparameter und einem Thyristor-Zündwinkel eines Leistungsreglers der Elektrode (212) verwendet werden, um den Lichtbogenausfall zu bestimmen.

3. Verfahren nach einem der Ansprüche 1 oder 2, ferner umfassend, als Reaktion auf das Bestimmen des Lichtbogenausfalls, Variieren des Thyristor-Zündwinkels, um eines oder mehrere von der Wiederzündung des Lichtbogens zu beschleunigen und das Steuern des Leistungsaufnahmeparameters der Elektrode (212) zu unterstützen.

4. Verfahren nach einem der Ansprüche 1 bis 3, ferner umfassend das Speichern eines Teils der Leistungsmenge in der Last (206) als Energie und das Abgeben dieser Energie an die Leistungsversorgung (220).

5. Verfahren nach einem der Ansprüche 1 bis 4, ferner umfassend das Erhalten des Ofenleistungsverbrauchsparameters aus einem oder mehreren eines elektronischen Ofenleistungssteuerungssystems (208), der Leistungsversorgung (220) und dem Lichtbogenofen (210).

6. Verfahren nach einem der Ansprüche 1 bis 5, wobei das Bestimmen des Lichtbogenausfallereignisses auf der Erfassung beruht, dass der Thyristor-Zündwinkel des Leistungsreglers der Elektrode (212) an einer Grenze liegt.

7. Verfahren nach Anspruch 6, wobei die Grenze eine untere Grenze ist.

8. Verfahren nach einem der Ansprüche 1 bis 7, wobei das Bestimmen des Lichtbogenausfallereignisses auf der Erfassung einer Schwellenwertänderung des Ofenleistungsverbrauchsparameters basiert, während sich der Thyristor-Zündwinkel des Leistungsreglers der Elektrode (212) an einer unteren Grenze befindet.

9. Verfahren nach einem der Ansprüche 1 bis 8, wobei das Bewegen der Elektrode (212) das Absenken der Elektrode (212) in dem Ofen (210) als Reaktion auf das Bestimmen des Lichtbogenausfallereignisses umfasst.

10. Verfahren nach einem der Ansprüche 1 bis 9, wobei das Bewegen der Elektrode (212) das Anheben der Elektrode (212) in dem Ofen (210) als Reaktion auf die Wiederzündung des Lichtbogens umfasst.

11. Verfahren nach einem der Ansprüche 1 bis 10, wobei der Teil der Leistungsmenge veranlasst wird, von der Last (206), die ein Energiespeichersystem umfasst, absorbiert zu werden.

12. System (200) zum Stabilisieren elektrischer Leistung, umfassend:
eine Last (206), die zum Verbinden an einen Lichtbogenofen (210) konfiguriert ist, der von einer Leistungsversorgung (220) angetrieben wird, wobei die Last (206) so dimensioniert ist, dass sie elektrische Leistung aus der Leistungsversorgung (220) für einen begrenzten Zeitraum speichert oder absorbiert;
eine Laststeuerung (204), die so konfiguriert ist, dass sie eine Menge an elektrischer Leistung reguliert, die die Last (206) von der Leistungsversorgung (220) erhält; und
eine Leistungsabfall-Kompensationssteuerung (PDC) (202) zur Kommunikation mit der Laststeuerung (204) und einem elektronischen Ofenleistungssteuerungssystems (208), wobei die PDC so konfiguriert ist, dass sie
ein Lichtbogenausfallereignis für eine Elektrode (212) des Lichtbogenofens (210) bestimmt,
die Last (206) dazu veranlasst, während des Lichtbogenausfallereignisses einen Teil der Menge an elektrischer Leistung von der Leistungsversorgung (220) zu speichern oder zu absorbieren,
eine Bewegung der Elektrode beschleunigt, um einen Lichtbogen der Elektrode (212) schneller wiederherzustellen, bevor die Last (206) während des begrenzten Zeitraums ihre volle Energiekapazität erhält, und
veranlasst, dass ein Thyristor-Zündwinkel des elektronischen Ofenleistungssteuerungssystems (208) dazu beiträgt, ein Wiederzünden des Lichtbogens innerhalb des begrenzten Zeitraums zu beschleunigen und ein Steuern des Elektrodenleistungsverbrauchsparameters der Elektrode (212) bei der Wiederherstellung des Lichtbogens zu unterstützen.

13. System nach Anspruch 12, ferner umfassend das elektronische Ofenleistungssteuerungssystem (208).

14. System (200) nach Anspruch 13, ferner umfassend Thyristoren des elektronischen Ofenleistungssteuerungssystems (208).

15. System (200) nach Anspruch 14, wobei die PDC so konfiguriert ist, dass sie das Lichtbogenausfallereignis basierend auf einem oder mehreren eines Ofenleistungsverbrauchsparameters und dem Zündwinkel der Thyristoren bestimmt.

16. System (200) nach einem der Ansprüche 12 bis 15, wobei die PDC so konfiguriert ist, dass sie veranlasst, dass der Teil der Leistungsmenge, der von der Last (206) absorbiert wird, die Leistungsmenge ist, die von der Elektrode (212) vor dem Lichtbogenausfallereignis erhalten wurde.

17. System (200) nach einem der Ansprüche 12 bis 16, wobei die Laststeuerung (204) eine Thyristorsteuerung ist, die so konfiguriert ist, dass sie die Leistungsmenge an die Last (206) regelt.

18. System (200) nach Anspruch 17, wobei die PDC so konfiguriert ist, dass sie den Thyristor-Zündwinkel als Reaktion auf das Bestimmen des Lichtbogenausfallereignisses variiert, um die Steuerung eines Stroms in der Elektrode (212) zu unterstützen.

19. System (200) nach einem der Ansprüche 12 bis 18, wobei die Spannungsabfall-Kompensationssteuerung (202) so konfiguriert ist, dass sie die Elektrode (212) dazu veranlasst, sich zu bewegen, und den Thyristor-Zündwinkel mit einer entsprechenden Rate variiert.

20. System (200) nach einem der Ansprüche 12 bis 19, wobei die Last (206) einen Widerstand umfasst.

21. System (200) nach Anspruch 20, wobei der Widerstand eine oder mehrere Reihen von Widerständen darstellt.

22. System (200) nach einem der Ansprüche 12 bis 19, wobei die Last (206) ein Energiespeichersystem umfasst.

23. System (200) nach einem der Ansprüche 12 bis 22, wobei die PDC so konfiguriert ist, dass sie die Versorgungsspannung anderer Elektroden, die von der Leistungsversorgung (220) angetrieben werden, erhöht, um zu veranlassen, dass die anderen Elektroden einen zweiten Teil der Leistungsmenge verbrauchen, die die Elektrode (212) vor dem Lichtbogenausfallereignis erhalten hat.

## Revendications

1. Procédé de stabilisation de la puissance électrique pour une perte d'un arc d'une électrode (212) dans un four à arc électrique (210), l'électrode (212) recevant une quantité de puissance électrique en provenance d'une alimentation électrique (220) pour produire l'arc, le procédé comprenant :
détermination d'un évènement de perte d'arc pour une électrode (212) ;
pendant une durée limitée, le fait de faire en sorte qu'une partie de la puissance électrique provenant de l'alimentation électrique (220) soit stockée ou absorbée par une charge (206),
l'accélération du mouvement de l'électrode (212) pour aider à l'accélération du réallumage de l'arc au cours de la durée limitée et aider à la commande d'un paramètre de consommation de puissance de l'électrode (212) ; et
après le réallumage de l'arc au cours de la durée limitée, le fait d'empêcher une partie de la puissance électrique d'être envoyée à la charge (206).

2. Procédé selon la revendication 1, dans lequel un ou plusieurs d'un paramètre de consommation de puissance de four et d'un angle de déclenchement de thyristor d'un dispositif de commande de puissance de l'électrode (212) sont utilisés pour déterminer la perte d'arc.

3. Procédé selon l'une quelconque des revendications 1 ou 2, comprenant en outre, en réponse à la détermination de l'événement de perte d'arc, le fait de faire varier l'angle de déclenchement de thyristor pour une ou plusieurs des étapes d'aide à l'accélération du réallumage de l'arc et d'aide à la commande d'un paramètre de consommation de puissance d'électrode (212) pour l'électrode (212).

4. Procédé selon l'une quelconque des revendications 1 à 3, comprenant en outre le stockage de ladite partie de la quantité de puissance dans la charge (206) sous forme d'énergie et la libération de cette énergie dans l'alimentation électrique (220).

5. Procédé selon l'une quelconque des revendications 1 à 4, comprenant en outre l'obtention des paramètres de consommation de puissance de four en provenance d'un ou plusieurs d'un système de commande électronique de puissance de four (208), de l'alimentation électrique (220) et du four à arc électrique (210).

6. Procédé selon l'une quelconque des revendications 1 à 5, dans lequel la détermination de l'événement de perte d'arc est basée sur la détection du fait que l'angle de déclenchement de thyristor du dispositif de commande de puissance de l'électrode (212) se situe à une limite.

7. Procédé selon la revendication 6, dans lequel la limite est une limite inférieure.

8. Procédé selon l'une quelconque des revendications 1 à 7, dans lequel la détermination de l'événement de perte d'arc est basée sur la détection d'un changement de seuil du paramètre de consommation de puissance de four tandis que l'angle de déclenchement de thyristor du dispositif de commande de puissance de l'électrode (212) se situe à une limite inférieure.

9. Procédé selon l'une quelconque des revendications 1 à 8, dans lequel le mouvement de l'électrode (212) comprend l'abaissement de l'électrode (212) dans le four (210) en réponse à la détermination de l'événement de perte d'arc.

10. Procédé selon l'une quelconque des revendications 1 à 9, dans lequel le mouvement de l'électrode (212) comprend la remontée de l'électrode (212) dans le four (210) en réponse au réallumage de l'arc.

11. Procédé selon l'une quelconque des revendications 1 à 10, dans lequel il est fait en sorte que ladite partie de la quantité de puissance soit absorbée par la charge (206), qui comprend un système de stockage d'énergie.

12. Système de stabilisation de la puissance électrique (200) comprenant :
une charge (206) configurée pour se connecter à un four à arc électrique (210) alimenté par une alimentation électrique (220), la charge (206) étant dimensionnée pour stocker ou absorber une puissance électrique provenant de l'alimentation électrique (220) pendant une durée limitée ;
un dispositif de commande de charge (204) configuré pour commander une quantité de la puissance électrique reçue par la charge (206) en provenance de l'alimentation électrique (220) ; et
un dispositif de commande de compensation de baisse de puissance (PDC) (202) destiné à communiquer avec le dispositif de commande de charge (204) et un système de commande électronique de puissance de four (208), le PDC étant configuré pour
déterminer un événement de perte d'arc pour une électrode (212) du four à arc électrique (210),
faire en sorte que la charge (206) stocke ou absorbe une partie de la quantité de puissance électrique provenant de l'alimentation électrique (220) pendant l'événement de perte d'arc,
accélérer le mouvement de l'électrode pour rétablir plus rapidement un arc de l'électrode (212) avant que la charge (206) reçoive sa pleine capacité énergétique pendant la période limitée, et
faire en sorte qu'un angle d'allumage de thyristor du système de commande électronique de puissance de four (208) aide à l'accélération du réallumage de l'arc au cours de la durée limitée et aide à la commande d'un paramètre de consommation de puissance de l'électrode (212) lors du rétablissement de l'arc.

13. Système selon la revendication 12, comprenant en outre le système de commande électronique de puissance de four (208).

14. Système (200) selon la revendication 13, comprenant en outre des thyristors du système de commande électronique de puissance de four (208).

15. Système (200) selon la revendication 14, dans lequel le PDC est configuré pour déterminer l'événement de perte d'arc sur la base d'un ou de plusieurs d'un paramètre de consommation de puissance de four et de l'angle d'allumage des thyristors.

16. Système (200) selon l'une quelconque des revendications 12 à 15, dans lequel le PDC est configuré pour faire en sorte que ladite partie de la quantité de puissance absorbée par la charge (206) soit la quantité de puissance reçue par l'électrode (212) avant l'événement de perte d'arc.

17. Système (200) selon l'une quelconque des revendications 12 à 16, dans lequel le dispositif de commande de charge (204) est un dispositif de commande à thyristor configuré pour réguler la quantité de puissance fournie à la charge (206).

18. Système (200) selon la revendication 17, dans lequel le PDC est configuré pour faire varier l'angle de déclenchement de thyristor, en réponse à la détermination de l'événement de perte d'arc, pour aider à commander un courant dans l'électrode (212).

19. Système (200) selon l'une quelconque des revendications 12 à 18, dans lequel le dispositif de commande de compensation de baisse de puissance (202) est configuré pour faire en sorte que l'électrode (212) se déplace et fasse varier l'angle de déclenchement de thyristor à une vitesse associée.

20. Système (200) selon l'une quelconque des revendications 12 à 19, dans lequel la charge (206) comprend une résistance.

21. Système (200) selon la revendication 20, dans lequel la résistance est constituée d'un ou plusieurs bancs de résistances.

22. Système (200) selon l'une quelconque des revendications 12 à 19, dans lequel la charge (206) comprend un système de stockage d'énergie.

23. Système (200) selon l'une quelconque des revendications 12 à 22, dans lequel le PDC est configuré pour augmenter la tension d'alimentation d'autres électrodes alimentées par l'alimentation électrique (220) pour faire en sorte que les autres électrodes consomment une seconde partie de la quantité de puissance que l'électrode (212) avait reçue avant l'événement de perte d'arc.
